# EUROPÄISCHE PATENTSCHRIFT

(11) **EP 0 524 447 B1**
(45) Veröffentlichungstag und Bekanntmachung des Hinweises auf die Patenterteilung: **14.12.1994**
(21) Anmeldenummer: 92110754.6
(22) Anmeldetag: 25.06.1992
(51) Int. Cl.: B60J 5/04, B60J 10/06

(54) **Fenstereinfassrahmen, insbesondere für Fahrzeuge**
Window frame particularly for vehicle
Encadrement de fenêtre en particulier pour véhicule

(30) Priorität: 24.07.1991 DE 4124495
(43) Veröffentlichungstag der Anmeldung: 27.01.1993
(73) Patentinhaber: Gebr. Happich GmbH, D-42097 Wuppertal (DE); DRAFTEX INDUSTRIES LIMITED, Edinburgh, EH3 6YY, Scotland (GB)
(72) Erfinder: Schürer, Wulf, W-4390 Gladbeck (DE); Marcus, Armin, W-5600 Wuppertal 1 (DE)

(56) Entgegenhaltungen:
- EP-A- 0 163 991
- EP-A- 0 317 988

## Beschreibung

Die Erfindung bezieht sich auf einen Fenstereinfaßrahmen, insbesondere für Fahrzeuge mit höhenverstellbaren Fensterscheiben, der an einem karosserieseitigen, insbesondere fahrzeugtürseitigen Fensterrahmen mit einer Schachtöffnung für die abzusenkende Fensterscheibe anordbar ist.

Fenstereinfaßrahmen der genannten Art haben einen wesentlichen Nachteil insofern, als sie aus vielen Einzelteilen bestehen, die in den Fahrzeugmontagewerken jeweils separat montiert werden müssen. Als Einbaueinzelelemente sind insbesondere zu benennen, die Fensterschachtabdeckungsprofile, die Fensterrahmen, die in der Regel aus mehreren Einzelleisten zusammengesetzt werden müssen, sowie die Fensterführungsprofile. Da die verschiedenen Einzelteile nicht immer aus einem Zulieferbetrieb stammen, kommt es auch häufig zu Anpassungsproblemen, wodurch der Montageaufwand noch erhöht wird. Die Fensterrahmen als solche besitzen Nahtstellen in den Eckbereichen, wodurch eine Korrosionsanfälligkeit gegeben ist. Auch kommt es im Bereich der Nahtstellen leicht zur Schmutzanhäufung.

Der vorliegenden Erfindung liegt die Aufgabe zugrunde, hier Abhilfe zu schaffen und einen Fenstereinfaßrahmen der eingangs genannten Art dahingehend zu verbessern, daß eine erleichterte Montage und ein wesentlich verbessertes Aussehen erreicht wird, wobei zudem eine Korrosionsanfälligkeit des Fensterrahmens in den Eckbereichen ausgeschlossen werden soll.

Die zur Lösung dieser Aufgabe vorgesehenen Maßnahmen sind im Anspruch 1 angegeben, während in den Unteransprüchen vorteilhafte Ausgestaltungen und zweckmäßige Weiterbildungen der Erfindung gekennzeichnet sind.

DieErfindung besteht darin, daß der Fenstereinfaßrahmen als Baueinheit ausgebildet ist und aus einem ersten Rahmen aus formstabilem und einem damit verbundenen zweiten Rahmen aus weichelastischem Material besteht, wobei der erste Rahmen einstückig ist und einen umlaufenden Halterungsteil für den zweiten Rahmen sowie einen nahtlos umlaufenden Zierbereich aufweist und wobei der zweite Rahmen aus einer peripherischen Rahmenprofilleiste, einer Fensterführungsprofilleiste und einer Fensterschachtabdeckungsprofilleiste gebildet ist.

Die besonderen Vorteile der erfindungsgemäßen Maßnahmen bestehen darin, daß den Automobilwerken nunmehr ein Fenstereinfaßrahmen als komplette Baueinheit zur Verfügung gestellt werden kann, der die bisher notwendigen einzelnen Montageoperationen erübrigt und der sich durch einen Zier- und Halterahmen auszeichnet, der aus einem Stück besteht. Die einstückige Ausbildung des ersten Rahmens, der die Zier- und Haltefunktion übernimmt, ist insofern wesentlich, als hierdurch korrosions- und verschmutzungsanfällige Verbindungsnähte in den Eckbereichen der Rahmenleisten entfallen und ein nahtloser Zierbereich geschaffen ist.

Der erste Rahmen aus formstabilem Material kann mit Vorteil als blechverformtes Stanz-Prägeteil ausgebildet sein. Hierfür wird zweckmäßigerweise ein Tafelblech oder Bandmaterial eingesetzt, aus dem der Rahmen ausgeformt wird. Dabei wird zweckmäßigerweise ein dreistufiges Verfahren, nämlich Schneiden, Prägen und Tiefziehen angewandt, wobei die Reihenfolge der Verfahrensschritte entsprechend dem jeweils vorhandenen Maschinenpark auszuwählen ist.

Der als blechverformtes Stanz-Prägeteil ausgebildete Rahmen kann aus Aluminium oder einer Aluminiumlegierung bestehen und eloxiert sowie gegebenenfalls eingefärbt sein. Die Verwendung von Aluminium für den ersten Rahmen bietet den Vorteil, das Rahmengewicht in Grenzen zu halten sowie den Vorteil, eine große Farbenvielfalt mit hohem Glanzgrad anbieten zu können.

Der als blechverformtes Stanz-Prägeteil ausgebildete Rahmen kann alternativ auch aus Edelstahl gebildet sein. Hierdurch ergibt sich der Vorteil einer hohen Festigkeit sowie der Vorteil, daß nach dem Verformen keine Oberflächenbehandlung mehr erforderlich ist. Für den Einsatz von Edelstahl spricht auch die Tatsache, daß heute farbige Edelstahlsorten erhältlich sind.

Als weitere Alternative sieht eine Weiterbildung der Erfindung vor, daß der erste Rahmen als mit einer Folie beschichtetes (kaschiertes) Stanz-Prägeteil ausgebildet ist. Durch diese Maßnahme ergibt sich die Möglichkeit, ein kostengünstiges Ausgangsmaterial einsetzen zu können, während die Kaschierung eine Farbenvielfalt ermöglicht.

Bei der Ausbildung des Rahmens als blechverformtes Stanz-Prägeteil bleibt zwar zwischen den Rahmenleisten ein Platinenreststück zurück. Dieser auf den ersten Blick als Nachteil erscheinende Umstand kann aber leicht hingenommen werden, weil erstens die durch die Erfindung erreichten Vorteile auch das Entstehen von Abfall rechtfertigen würden und weil zweitens die anfallenden Reststücke für die Herstellung von Spiegelgehäusen, Türgriffapplikationen und vieles mehr sinnvoll verwendet werden können.

Mit Vorteil kann gemäß einer anderen Ausführungsform der Erfindung der erste Rahmen als Kunststoff-Spritzgußteil oder Kunststoff-Preßformteil ausgebildet sein. Dabei ist zweckmäßigerweise ein mit Glasfasern oder anderen Füllstoffen stabilisiertes Kunststoffmaterial einzusetzen und gegebenenfalls auch Wert darauf zu legen, daß ein einfärbbares Kunststoffmaterial eingesetzt wird. Beispielsweise sind Fertigteile aus ABS galvanisierbar und damit für den vorliegenden Einsatzzweck als geeignet anzusehen.

Gemäß einer Weiterbildung der Erfindung ist der erste Rahmen in einem Eckbereich mit einer einstückig und materialeinheitlich angeformten Lagerplatte für einen Fahrzeugaußenspiegel ausgebildet. Durch diese Maßnahme wird der Montageaufwand noch weitergehend minimiert.

Es kann weiterhin vorgesehen sein, daß der Halterungsteil des ersten Rahmens aus einem, sich über die Länge des Fensterführungsbereiches erstreckenden, senkrecht zur Fensterscheibenebene ausgerichteten Flansch und aus einer sich über die Länge der Schachtöffnung erstreckenden rinnenförmigen Aufnahme für buchsenartige Befestigungselemente besteht. Im Falle der Ausbildung des ersten Rahmens als Kunststoffteil, können die buchsenartigen Befestigungselemente auch einstückig angeformt sein.

Mit Vorteil ist weiterhin vorgesehen, daß der zweite Rahmen aus dem Abschnitt einer Rahmenprofilleiste, dem Abschnitt einer sich parallel zu dieser erstreckenden Fensterführungsprofilleiste und dem Abschnitt einer Schachtabdeckungsprofilleiste gebildet ist, wobei zumindest die Enden der Rahmenprofilleiste und die der Schachtabdeckungsprofilleiste in Rahmeneckbereichen unlösbar miteinander verbunden sind. Für die Verbindung der profilleistenenden können herkömmliche Techniken, wie Kleben, Schweißen, Vulkanisieren oder Eckanspritzungen vorgesehen sein, wobei den letzteren im allgemeinen der Vorzug zu geben ist. Die Teile des zweiten Rahmens sollten aus elastomerem und/oder thermoplastischem Material bestehen.

Eine weitere Ausgestaltung der Erfindung sieht vor, daß die Rahmenprofilleiste und die Fensterführungsprofilleiste jeweils eine zur Schachtöffnung hin kontinuierlich zunehmende Querschnittsvergrößerung über einen axialen Teilbereich aufweisen. Durch diese Maßnahme wird dem Umstand Rechnung getragen, daß eine Fahrzeugtür im Schachtabdeckungsbereich dicker als am oberen Türende ist. Die Querschnittsvergrößerung der Rahmenprofilleiste kann zweckmäßigerweise durch einen sich über einen axialen Teilbereich derselben erstreckenden Trennschnitt Auseinanderziehen der getrennten Bereiche und Ausfütterung des sich ergebenden Freiraumes hergestellt werden. Die Ausfütterung erfolgt vorzugsweise durch Einspritzen eines plastifizierten Kunststoff- oder Gummimaterials unter Verwendung einer entsprechenden Hilfsvorrichtung, wie man sie z.B. für die Herstellung von Eckverbindungen verwendet. Die Querschnittsvergrößerung der Fensterführungsprofilleiste wird hingegen zweckmäßigerweise durch Anformen einer zur Schachtöffnung in der Dicke zunehmenden Auffütterung durchgeführt. Besonders zweckmäßig ist es, die Endbereiche der Rahmenprofilleiste und der Fensterführungsprofilleiste jeweils gemeinsam in das Formnest einer Spritzgußvorrichtung einzulegen und hier in einem Arbeitsgang die Ausfütterung, die Auffütterung und die Eckenausbildung vorzunehmen.

In weiterer Ausgestaltung der Erfindung weist die Rahmenprofilleiste eine eingelagerte Verstärkungseinlage auf und ist außenseitig mit einem Dichtschlauch und zumindest einer Dichtlippe ausgebildet. Damit weist der Fenstereinfaßrahmen alle notwendigen Funktionselemente, in einer Baueinheit zusammengefaßt, auf.

Eine weitere vorteilhafte Ausgestaltung der Erfindung sieht vor, daß die Schachtabdeckungsprofilleiste im Querschnitt U-förmig ist und einen Steg sowie zwei Schenkel aufweist, die im Anlieferungszustand der Baueinheit schräg auseinanderlaufen und nach erfolgter Montage der Baueinheit durch Klemmittel gegeneinander bewegbar und verspannbar sind. Diese Maßnahme ist von besonderer Bedeutung, weil sie die Montage des Fenstereinfaßrahmens wesentlich erleichtert. Die Schrägstellung der Schenkel ermöglicht es, die komplette Baueinheit schräg von oben her auf einen schachtöffnungsseitigen Türflansch aufzusetzen, um hiernach die Baueinheit gegen den Fensterrahmen der Tür zu schwenken. Hiernach ist die Baueinheit durch geeignete Befestigungsmittel am Fensterrahmen der Tür festzulegen und die Schenkel der Schachtabdeckungsprofilleiste sind gegeneinander unter Einschluß des Türflansches zu verspannen. Dabei dienen als Klemmittel die bereits erwähnten, in der rinnenförmigen Aufnahme des Halterungsteils des ersten Rahmens angeordneten buchsenartigen Befestigungselemente sowie in diese eindrehbare Schrauben, wobei die Befestigungselemente im Bereich des einen Schenkels der Schachtabdeckungsprofilleiste sitzen, während die Schrauben mit ihrem Schaft den anderen Schenkel derselben durchsetzen. In diesem Zusammenhang ist zu erwähnen, daß der Türflansch zum Durchlaß der Schrauben, die ebenso wie die Befestigungselemente an der Baueinheit vormontiert sind, mit randoffenen Schlitzen auszubilden ist.

Damit sich die gewollte Konfiguration der Schachtabdeckungsprofilleiste beim Gegeneinanderziehen der Schenkel nicht verändert, ist gemäß einer weiteren Ausgestaltung der Erfindung vorgesehen, daß die Schachtabdeckungsprofilleiste eine längsgeteilte, also zweiteilige Versteifungseinlage aufweist, wobei die Teilungszone zwischen den Versteifungseinlagen ein Scharnier beim Gegeneinanderbewegen der Schenkel bildet.

Schließlich ist vorgesehen, daß an dem Flansch des ersten Rahmens Stützelemente befestigt sind, die zusammen mit dem Zierbereich des ersten Rahmens einen U-förmigen Aufnahmekanal für die Fensterführungsprofilleiste bilden und daß die Befestigungselemente für die Stützelemente gleichzeitig die Rahmenprofilleiste am ersten Rahmen halten.

Ein bevorzugtes Ausführungsbeispiel der Erfindung wird im folgenden anhand der Zeichnung näher erläutert.

Es zeigen:
- Fig. 1: die schaubildliche Ansicht einer Fahrzeugtür im Fensterbereich mit einem vorgesetzten Fenstereinfaßrahmen,
- Fig. 2: einen Schnitt folgend der Linie II - II in Fig. 1,
- Fig. 3: einen Schnitt folgend der Linie III - III in Fig. 1 und
- Fig. 4: einen Schnitt folgend der Linie IV - IV in Fig. 1.

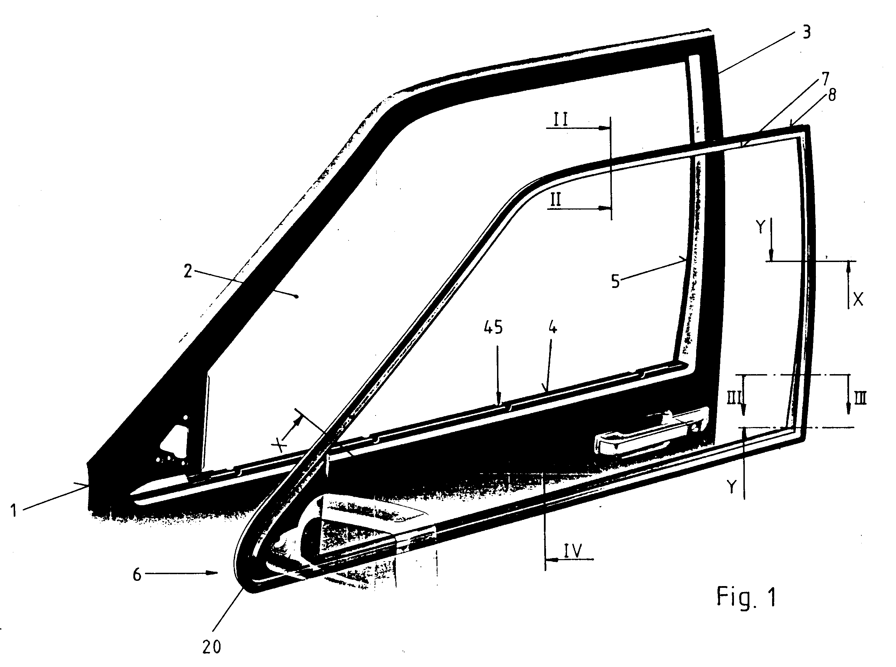

Fig. 1 zeigt den oberen Teilbereich einer Fahrzeugtür 1 mit einem, eine Fensteröffnung 2 umgebenen Fensterrahmen 3. Die Tür 1 weist schachtöffnungsseitig einen Türflansch 4, der aus zwei Einzelflanschen bestehen kann und einen fensteröffnungsseitigen Umlaufflansch 5 auf.

In die Fensteröffnung 2 der Tür 1 ist der Fenstereinfaßrahmen eingesetzt und an den Türflanschen 4 und 5 befestigt.

Eine erste Besonderheit des Fenstereinfaßrahmens besteht darin, daß derselbe als eine einbaufertige Baueinheit 6 ausgebildet ist. Diese Baueinheit 6 besteht im wesentlichen aus einem ersten Rahmen 7 aus formstabilem Material und aus einem damit verbundenen zweiten Rahmen 8 aus weichelastischem Material, wie Gummi.

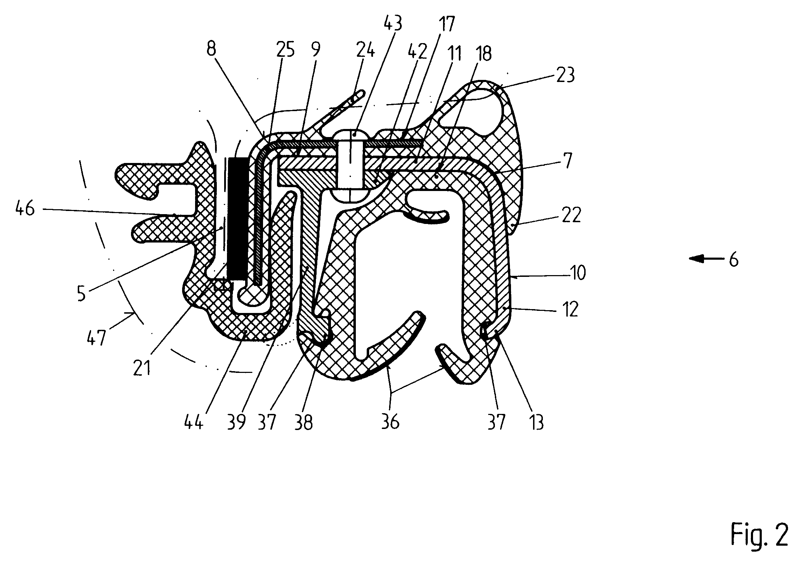

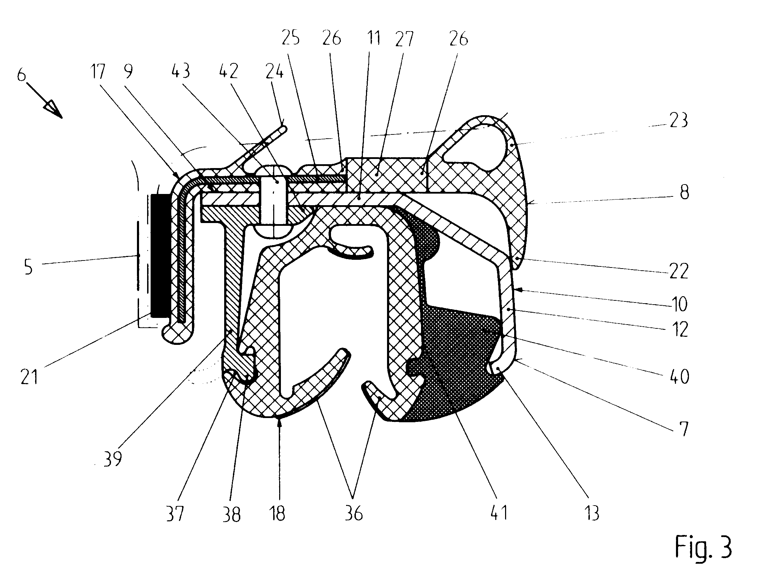

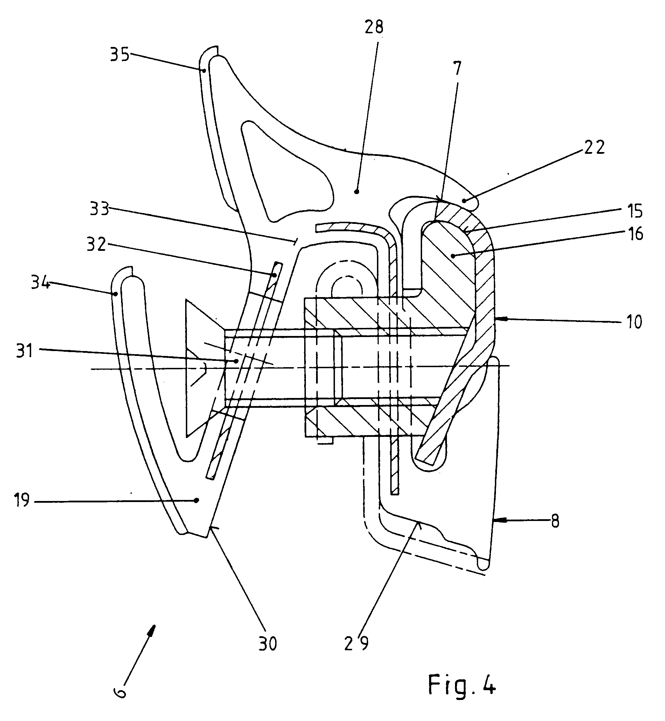

Der erste Rahmen 7 ist einstückig und weist ein Halterungsteil 9 und einen Zierbereich 10 auf. Etwa über die Strecke von Pfeil X bis Pfeil X in Fig. 1 ist der Rahmen 7 mit einem winkelprofilartigen Querschnitt ausgebildet und besitzt hier einen Flansch 11 als Halterungsteil 9 und einen Schenkel 12 als Zierbereich (Fig. 2). Der Flansch 11 ist senkrecht zur Türblattebene und der Schenkel etwa parallel zu dieser ausgerichtet. Der freie Endbereich des Schenkels 12 ist durchlaufend zur Tür 1 hin gebogen und bildet eine Rastnase 13. Etwa über die Strecke von Pfeil Y bis Pfeil Y besitzt der erste Rahmen 7 den aus Fig. 3 ersichtlichen Querschnitt. Dabei nimmt die Breite des Streifens 14 zum Türflansch 4 hin kontinuierlich zu, um der hier zunehmenden Türdicke gerecht zu werden. Der Querschnitt des ersten Rahmens über die Länge des Türschachts ist in Fig. 4 dargestellt. Hier ist das Halterungsteil 9 als rinnenförmige Aufnahme 15 ausgebildet, in der buchsenartige Befestigungselemente 16 angeordnet sind. Im vorderen Eckbereich weist der erste Rahmen 7 eine Spiegelmontageplatte 20 einstückig angeformt auf.

Der zweite Rahmen 8 wird gebildet aus einer Rahmenprofilleiste 17, einer Fensterführungsprofilleiste 18 und einer Fensterschachtabdeckprofilleiste 19. Die Rahmenprofilleiste 17 weist etwa über die Strecke zwischen den Pfeilen X - X in Fig. 1 den aus Fig. 2 ersichtlichen Querschnitt auf. Sie ist etwa als Winkelprofil gestaltet mit einem ersten Schenkel, der unter Zwischenlage eines Antidröhnmaterialstreifens 21 am Umlaufflansch 5 der Fahrzeugtür zur Anlage kommt und einem zweiten Schenkel, der sich auf dem Flansch 11 des ersten Rahmens 7 abstützt. Der zweite Schenkel weist am freien Endbereich eine den Schenkel 12 des ersten Rahmens 7 bereichsweise übergreifende Anlagenase 22 und oberseitig ein Schlauchprofil 23 und eine Dichtlippe 24 auf, um eine toleranzausgleichende Abdichtung des Fenstereinfaßrahmens gegenüber dem Fensterrahmen 3 der Tür 1 herzustellen. Zur Stabilisierung ist in der Rahmenprofilleiste 17 eine Verstärkungseinlage 25, die z.B. aus einem metallischen Gitterband besteht, eingelagert.

Im Bereich zwischen den Pfeilen Y - Y in Fig. 1 besitzt die Rahmenprofilleiste 17 einen aus Fig. 3 ersichtlichen Querschnitt. In Anpassung an die zum Schachtbereich zunehmende Türdicke, ist der horizontale Schenkel der Rahmenprofilleiste 17 über die Strecke Y - Y durchschnitten. Die durch den Schnitt voneinander getrennten Leistenteile sind unter Bildung eines keilförmigen Spalts auseinandergezogen und die Spaltöffnung ist durch ein Füllmaterial wieder ausgefüllt. In Fig. 3 sind die Schnittränder des Einschnittes mit 26 und das Füllmaterial mit 27 bezeichnet.

Zumindest in dem, in Fig. 1 rechts unten dargestellten Eckbereich, gegebenenfalls aber auch im Bereich der Spiegelmontageplatte 20, ist eine feste, übergangslose Verbindung zwischen der Rahmenprofilleiste 17 einerseits und der Fensterschachtabdeckprofilleiste 19 andererseits unter Zuhilfenahme bekannter Verbindungstechniken, zu denen insbesondere auch das Anspritzen von Verbindungsecken gehört, hergestellt. Die Verbindung sollte dergestalt sein, als würde der zweite Rahmen 8 aus einem Guß bestehen.

Die Fensterschachtabdeckprofilleiste 19 ist in Fig. 4 im Querschnitt dargestellt. Wie ersichtlich, ist sie U-förmig und weist einen Steg 28 und zwei Schenkel 29, 30 auf. Die Schenkel 29, 30 laufen nach außen auseinander und bilden somit eine trichterförmige Öffnung, welche von seitlich oben über den Türflansch 4 gebracht werden kann. Die Schenkel 29, 30 werden auf Parallelabstand zueinander gebracht, indem den Schenkel 30 durchsetzende Schrauben 31 in die schon erwähnten buchsenartigen Befestigungselemente 16 eingedreht werden. Die Fensterschachtabdeckprofilleiste 19 weist eine längsgeteilte Versteifungseinlage 32 auf, wobei die Teilungszone 33 ein Scharnier beim Gegeneinanderbewegen der Schenkel 29, 30 bildet. Die Fensterschachtabdeckprofilleiste 19 ist mit üblichen, gegen die nicht gezeigte Fensterscheibe wirkenden Dichtlippen 34, 35 versehen.

Die Fensterführungsprofilleiste 18, die die Fensterscheibe an den Längsrändern und am Kopfrand führt, weist einen U-förmigen Querschnitt und Anlagelippen 36 für die Fensterscheibe auf. Außenseitig ist die Fensterführungsprofilleiste mit ihrer Halterung dienenden Nuten 37 ausgebildet, wobei in die eine Nut die Rastnase 13 des ersten Rahmens 7 und in die andere eine Rastnase 38, die an einem Befestigungselement 39 ausgebildet ist, eingreift. Im übrigen ist auch die Fensterführungsprofilleiste über die Strecke Y - Y mit einem zum Fensterschacht hin zunehmenden Querschnitt ausgebildet, was z.B. durch Materialaufspritzung zu bewerkstelligen ist. In Fig. 3 ist die "Auffütterung" mit 40 und der vorherige Konturverlauf mit 41 bezeichnet. Es ist möglich, aber nicht zwingend erforderlich, zwischen der Fensterführungsprofilleiste 18 und der Fensterschachtabdeckprofilleiste 19 eine feste Verbindung vorzusehen, während eine solche Verbindung zwischen der Rahmenprofilleiste 17 und der Fensterschachtabdeckprofilleiste 19 zwingend ist.

Die Baueinheit 6 wird durch Zusammenstecken des ersten Rahmens 7 und des zweiten Rahmens 8 gebildet. Als zusätzliche Maßnahme ist nur noch die Halterung der Rahmen 7 und 8 aneinander vorzusehen. Hierzu dienen die Befestigungselemente 39, die mit einem Kopfflansch 42 an dem Flansch 11 des ersten Rahmens 7 zur Anlage gebracht und mittels geeigneter Befestigungselemente, wie Nieten 43 an diesen befestigt werden. Dabei wird, wie aus den Fig. 2 und 3 ersichtlich, gleichzeitig auch die Rahmenprofilleiste 17 am Flansch 11 des ersten Rahmens 7 gehaltert.

Bei der Montage der Baueinheit 6, wird diese schräg von oben auf den Türflansch 4 aufgesetzt. Dieser weist für den Durchlaß der vormontierten Schrauben 31 randoffene Schlitze 45 auf. Die Baueinheit 6 wird hiernach gegen den Fensterrahmen 3 der Tür 1 geschwenkt und hier durch Befestigungsmittel, z.B. in Form der in Fig. 2 strichpunktiert angedeuteten Klammern 44, festgelegt. Nach dem noch durchzuführenden Anziehen der Schrauben 31 ist die Montage des Fenstereinfaßrahmens beendet. Es ist noch anzumerken, daß die Klammern 44 jeweils mit einer Klipsaufnahme 46 zur Halterung einer lediglich strichpunktiert angedeuteten Abdeckung 47 ausgebildet sein können.

## Patentansprüche

1. Fenstereinfaßrahmen (6), insbesondere für Fahrzeuge mit höhenverstellbaren Fensterscheiben, der an einem karosserieseitigen, insbesondere fahrzeugtürseitigen Fensterrahmen (3) mit einer Schachtöffnung für die abzusenkende Fensterscheibe anordbar ist, dadurch gekennzeichnet, daß der Fenstereinfaßrahmen (6) als Baueinheit (6), bestehend aus einem ersten Rahmen (7) aus formstabilem und einem damit verbundenen zweiten Rahmen (8) aus weichelastischem Material, ausgebildet ist, daß der erste Rahmen (7) einstückig ist und einen umlaufenden Halterungsteil (9) für den zweiten Rahmen (8) sowie einen nahtlos umlaufenden Zierbereich (10) aufweist, und daß der zweite Rahmen (8) aus einer peripherischen Rahmenprofilleiste (17), einer Fensterführungsprofilleiste (18) und einer Fensterschachtabdeckprofilleiste (19) gebildet ist.

2. Fenstereinfaßrahmen nach Anspruch 1, dadurch gekennzeichnet, daß der erste Rahmen (7) als blechverformtes Stanz-Prägeteil ausgebildet ist.

3. Fenstereinfaßrahmen nach Anspruch 1 oder 2, dadurch gekennzeichnet, daß der erste Rahmen (7) aus Aluminium oder einer Aluminiumlegierung besteht und eloxiert sowie gegebenenfalls eingefärbt ist.

4. Fenstereinfaßrahmen nach Anspruch 1 oder 2, dadurch gekennzeichnet, daß der erste Rahmen (7) aus Edelstahl gefertigt ist.

5. Fenstereinfaßrahmen nach Anspruch 1 oder 2, dadurch gekennzeichnet, daß der erste Rahmen (7) als mit einer Folie beschichtetes (kaschiertes) Stanz-Prägeteil ausgebildet ist.

6. Fenstereinfaßrahmen nach Anspruch 1, dadurch gekennzeichnet, daß der erste Rahmen (7) als Kunststoff-Spritzgußteil oder Kunststoff-Preßformteil ausgebildet ist.

7. Fenstereinfaßrahmen nach zumindest einem der Ansprüche 1 bis 6, dadurch gekennzeichnet, daß der erste Rahmen (7) in einem Eckbereich mit einer einstückig und materialeinheitlich angeformten Lagerplatte (20) für einen Fahrzeugaußenspiegel ausgebildet ist.

8. Fenstereinfaßrahmen nach zumindest einem der Ansprüche 1 bis 7, dadurch gekennzeichnet, daß der Halterungsteil (9) des ersten Rahmens (7) aus einem, sich über die Länge des Fensterführungsbereichs erstreckenden, senkrecht zur Fensterscheibenebene ausgerichteten Flansch (11) und aus einer, sich über die Länge der Schachtöffnung erstreckenden rinnenförmigen Aufnahme (15) für buchsenartige Befestigungselemente (16) besteht.

9. Fenstereinfaßrahmen nach zumindest einem der Ansprüche 1 bis 8, dadurch gekennzeichnet, daß der zweite Rahmen (8) aus dem Abschnitt einer Rahmenprofilleiste (17), dem Abschnitt einer sich parallel zu dieser erstreckenden Fensterführungsprofilleiste (18) und dem Abschnitt einer Fensterschachtabdeckungsprofilleiste (19) gebildet ist, wobei zumindest die Enden der Rahmenprofilleiste (17) und die der Fensterschachtabdeckprofilleiste (19) in Rahmeneckbereichen unlösbar miteinander verbunden sind.

10. Fenstereinfaßrahmen nach zumindest einem der Ansprüche 1 bis 9, dadurch gekennzeichnet, daß die Teile des zweiten Rahmens (8) aus elastomerem und/oder thermoplastischem Material bestehen.

11. Fenstereinfaßrahmen nach zumindest einem der Ansprüche 1 bis 10, dadurch gekennzeichnet, daß die Rahmenprofilleiste (17) und die Fensterführungsprofilleiste (10) jeweils eine zur Schachtöffnung hin kontinuierlich zunehmende Querschnittsvergrößerung über einen axialen Teilbereich aufweisen.

12. Fenstereinfaßrahmen nach zumindest einem der Ansprüche 1 bis 11, dadurch gekennzeichnet, daß die Rahmenprofilleiste (17) eine eingelagerte Verstärkungseinlage (25) aufweist und außenseitig mit einem Dichtschlauch (23) und zumindest einer Dichtlippe (24) ausgebildet ist.

13. Fenstereinfaßrahmen nach zumindest einem der Ansprüche 1 bis 12, dadurch gekennzeichnet, daß die Fensterschachtabdeckprofilleiste (19) im Querschnitt U-förmig ist und einen Steg (28) sowie zwei Schenkel (29, 30) aufweist, wobei die Schenkel (29, 30) im Anlieferungszustand der Baueinheit (6) schräg auseinanderlaufen und nach erfolgter Montage der Baueinheit (6) durch Klemmittel gegeneinander bewegbar und verspannbar sind.

14. Fenstereinfaßrahmen nach zumindest einem der Ansprüche 1 bis 13, dadurch gekennzeichnet, daß als Klemmittel die in der rinnenförmigen Aufnahme (15) des Halterungsteils (9) des ersten Rahmens (7) angeordneten buchsenartigen Befestigungselemente (16) sowie in diese eindrehbare Schrauben (31) dienen, wobei die Befestigungselemente (16) im Bereich des einen Schenkels (29) der Fensterschachtabdeckprofilleiste (19) sitzen, wahrend die Schrauben (31) mit ihrem Schaft den anderen Schenkel (30) derselben durchsetzen.

15. Fenstereinfaßrahmen nach zumindest einem der Ansprüche 1 bis 14, dadurch gekennzeichnet, daß die Fensterschachtabdeckprofilleiste (19) eine längsgeteilte Versteifungseinlage (32) aufweist, wobei die Teilungszone (33) zwischen den Versteifungseinlagen ein Scharnier beim Gegeneinanderbewegen der Schenkel (29, 30) bildet.

16. Fenstereinfaßrahmen nach zumindest einem der Ansprüche 1 bis 15, dadurch gekennzeichnet, daß an dem Flansch (11) des ersten Rahmens (7) Stützelemente (39) befestigt sind, die zusammen mit dem Zierbereich (10) des ersten Rahmens (7) einen U-förmigen Aufnahmekanal für die Fensterführungsprofilleiste (18) bilden und daß die Befestigungselemente (43) für die Stützelemente (39) gleichzeitig die Rahmenprofilleiste (17) am ersten Rahmen (7) halten.

## Claims

1. Window-encasing frame (6), especially for vehicles having height-adjustable window panes, which can be disposed on a window frame (3) on the bodywork side, especially on the vehicle door side, having a shaft opening for the window pane to be lowered, characterized in that the window-encasing frame (6) is configured as a structural unit (6), comprising a first frame (7) made from dimensionally stable material and a second frame (8) connected thereto and made from flexible material, in that the first frame (7) is in one piece and exhibits a bordering holding part (9) for the second frame (8) and a seamless-bordering ornamental region (10), and in that the second frame (8) is formed from a peripheral frame profiled moulding (17), a window guide profiled moulding (18) and a window shaft-covering profiled moulding (19).

2. Window-encasing frame according to Claim 1, characterized in that the first frame (7) is configured as a metal-deformed punched-stamped part.

3. Window-encasing frame according to Claim 1 or 2, characterized in that the first frame (7) consists of aluminium or an aluminium alloy and is anodized and, where appropriate, stained.

4. Window-encasing frame according to Claim 1 or 2, characterized in that the first frame (7) is produced from special steel.

5. Window-encasing frame according to Claim 1 or 2, characterized in that the first frame (7) is configured as a film-coated (laminated) punched-stamped part.

6. Window-encasing frame according to Claim 1, characterized in that the first frame (7) is configured as a plastics injection-moulded part or plastics press-moulded part.

7. Window-encasing frame according to at least one of Claims 1 to 6, characterized in that the first frame (7) is configured in a corner region having a bearing plate (20), which is formed on integrally and in one piece, for an external mirror on a vehicle.

8. Window-encasing frame according to at least one of Claims 1 to 7, characterized in that the holding part (9) of the first frame (7) comprises a flange (11), which extends over the length of the window guide region and is aligned perpendicular to the plane of the window pane, and a groove-shaped receiving fixture (15), which extends over the length of the shaft opening, for bush-like fastening elements (16).

9. Window-encasing frame according to at least one of Claims 1 to 8, characterized in that the second frame (8) is formed from the segment of a frame profiled moulding (17), the segment of a window guide profiled moulding (18) extending parallel to the said frame profiled moulding and the segment of a window shaft-covering profiled moulding (19), at least the ends of the frame profiled moulding (17) and those of the window shaft-covering profiled moulding (19) being non-detachably joined together in the corner regions of the frame.

10. Window-encasing frame according to at least one of Claims 1 to 9, characterized in that the parts of the second frame (8) consist of elastomeric and/or thermoplastic material.

11. Window-encasing frame according to at least one of Claims 1 to 10, characterized in that the frame profiled moulding (17) and the window guide profiled moulding (10) respectively exhibit, over an axial part-region, a cross-sectional enlargement which grows continuously in the direction of the shaft opening.

12. Window-encasing frame according to at least one of Claims 1 to 11, characterized in that the frame profiled moulding (17) exhibits an embedded strengthening inlay (25) and is configured on the outside having a sealing hose (23) and at least one sealing lip (24).

13. Window-encasing frame according to at least one of Claims 1 to 12, characterized in that the window shaft-covering profiled moulding (19) is U-shaped in cross-section and exhibits a crosspiece (28) and two legs (29, 30), wherein the legs (29, 30), in the delivery state of the structural unit (6), diverge obliquely and, following completed assembly of the structural unit (6), are able to be moved and braced against each other by clamping means.

14. Window-encasing frame according to at least one of Claims 1 to 13, characterized in that the function of clamping means is served by the bush-like fastening elements (16) disposed in the groove-shaped receiving fixture (15) of the holding part (9) of the first frame (7) and by screws (31) which can be screwed into the said fastening elements, the fastening elements (16) being seated in the region of the one leg (29) of the window shaft-covering profiled moulding (19), whilst the screws (31) pass with their shank through its other leg (30).

15. Window-encasing frame according to at least one of Claims 1 to 14, characterized in that the window shaft-covering profiled moulding (19) exhibits a longitudinally divided stiffening inlay (32), the dividing zone (33) between the stiffening inlays forming a hinge whenever the legs (29, 30) are moved against each other.

16. Window-encasing frame according to at least one of Claims 1 to 15, characterized in that fastened to the flange (11) of the first frame (7) are supporting elements (39), which, together with the ornamental region (10) of the first frame (7), form a U-shaped receiving channel for the window guide profiled moulding (18), and in that the fastening elements (43) for the supporting elements (39) simultaneously hold the frame profiled moulding (17) on the first frame (7).

## Revendications

1. Encadrement de fenêtre (6), notamment pour véhicules, à vitre déplaçable en hauteur, qui peut être monté sur la carrosserie et en particulier sur le cadre de fenêtre (3) d'une porte de véhicule, avec une ouverture du logement destiné à la vitre quand elle s'abaisse, caractérisé en ce que l'encadrement de fenêtre (6) qui se présente sous la forme d'un ensemble (6) est constitué par un premier cadre (7) de forme stable et un second cadre (8) relié au premier et en un matériau élastique et souple, en ce que le premier cadre (7) est d'un seul tenant et comprend une partie de retenue périphérique (9) pour le second cadre (8) ainsi qu'une zone périphérique sans soudure d'enjolivage (10), et en ce que le second cadre (8) est constitué par une bande profilée de cadre périphérique (17), une bande profilée de guidage de fenêtre (18) et une bande profilée de recouvrement de logement de vitre (19).

2. Encadrement de fenêtre selon la revendication 1, caractérisé en ce que le premier cadre (7) est constitué par un élément estampé en tôle façonnée.

3. Encadrement de fenêtre selon la revendication 1 ou 2, caractérisé en ce que le premier cadre (7) est constitué en aluminium ou en alliage d'aluminium anodisé ainsi qu'éventuellement coloré.

4. Encadrement de fenêtre selon la revendication 1 ou 2, caractérisé en ce que le premier cadre (7) est réalisé en acier fin.

5. Encadrement de fenêtre selon la revendication 1 ou 2, caractérisé en ce que le premier cadre (7) est constitué par un élément estampé recouvert (plaqué) avec une feuille.

6. Encadrement de fenêtre selon la revendication 1, caractérisé en ce que le premier cadre (7) est constitue par un élément en matière synthétique coulé par injection ou par un élément moulé sous pression en matière synthétique.

7. Encadrement de fenêtre selon l'une au moins des revendications 1 à 6, caractérisé en ce que le premier cadre (7) comprend dans une région de coin une plaque d'appui (20) formée d'un seul tenant et en le même matériau, destinée à un rétroviseur extérieur du véhicule.

8. Encadrement de fenêtre selon l'une au moins des revendications 1 à 7, caractérisé en ce que la partie de retenue (9) du premier cadre (7) est constituée par une bride (11) s'étendant sur la longueur de la région de guidage de la fenêtre et perpendiculairement au plan de la vitre, et par une partie de réception en forme de rainure (15) s'étendant sur la longueur de l'ouverture du logement et destinée à des éléments de fixation du type douille (16).

9. Encadrement de fenêtre selon l'une au moins des revendications 1 à 8, caractérisé en ce que le second cadre (8) est constitué par la section d'une bande profilée de cadre (17), la section d'une bande profilée de guidage de fenêtre (18) s'étendant parallèlement à cette dernière, et par la section d'une bande profilée de recouvrement de logement de vitre (19), les extrémités de la bande profilée de cadre (17) et celles de la bande profilée de recouvrement de logement de vitre (19) au moins étant reliées l'une à l'autre de façon définitive dans les régions de coin du cadre.

10. Encadrement de fenêtre selon l'une au moins des revendications 1 à 9, caractérisé en ce que les parties du second cadre (8) sont constituées en un matériau élastomère et/ou thermoplastique

11. Encadrement de fenêtre selon l'une au moins des revendications 1 à 10, caractérisé en ce que la bande profilée de cadre (17) et la bande profilée de guidage de fenêtre (10) comprennent respectivement une section allant en augmentant de façon continue en direction de l'ouverture du logement de la vitre sur une région axiale partielle.

12. Encadrement de fenêtre selon l'une au moins des revendications 1 à 11, caractérisé en ce que la bande profilée de cadre (17) comprend un insert de renforcement incorporé (25) et comprend sur son côté externe une partie tubulaire d'étanchéité flexible (23) et au moins une lèvre d'étanchéité (24).

13. Encadrement de fenêtre selon l'une au moins des revendications 1 à 12, caractérisé en ce que la bande profilée de recouvrement de logement de fenêtre (19) est de section en U et comprend une partie de dos (28) ainsi que deux branches (29, 30), les branches (29, 30) étant disposées en oblique en s'éloignant l'une de l'autre à l'état de livraison de l'ensemble (6) et pouvant être déplacées l'une vers l'autre et serrées par des moyens de serrage après montage de l'ensemble (6).

14. Encadrement de fenêtre selon l'une au moins des revendications 1 à 13, caractérisé en ce que les éléments de fixation du type douille disposés dans l'évidement en forme de rainure (15) de la partie de retenue (9) du premier cadre (7) ainsi que les vis (31) qui peuvent être vissées dans ces éléments servent de moyens de serrage, les éléments de fixation (16) s'appuyant dans la zone d'une branche (29) de la bande profilée de recouvrement de logement de vitre (19) alors que les vis (31) traversent par leurs tiges l'autre branche (30).

15. Encadrement de fenêtre selon l'une au moins des revendications 1 à 14, caractérisé en ce que la bande profilée de recouvrement de logement de vitre (19) comprend un insert de renforcement (32) divisé longitudinalement, la zone de séparation (33) entre les inserts de renforcement formant une charnière lors du rapprochement des branches (29, 30) l'une vers l'autre.

16. Encadrement de fenêtre selon l'une au moins des revendications 1 à 15, caractérisé en ce que des éléments d'appui (39) sont fixés sur la bride (11) du premier cadre (7), qui forment avec la zone d'enjolivage (10) du premier cadre (7) un canal de réception en forme de U pour la bande profilée de guidage de fenêtre (18), et en ce que les éléments de fixation (43) destinés aux éléments d'appui (39) retiennent simultanément la bande profilée de cadre (17) sur le premier cadre (7).
